(19) **Europäisches Patentamt**

**European Patent Office**

**Office européen des brevets**

(11) **EP 1 674 507 A1**

(12) **EUROPÄISCHE PATENTANMELDUNG**

(43) Veröffentlichungstag:
28.06.2006 Patentblatt 2006/26

(51) Int Cl.:
*C08J 5/18* (2006.01)       *C08K 3/36* (2006.01)
*C08K 3/22* (2006.01)

(21) Anmeldenummer: 05027261.6

(22) Anmeldetag: 14.12.2005

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **21.12.2004 DE 102004061389**

(71) Anmelder: **Mitsubishi Polyester Film GmbH**
**65203 Wiesbaden (DE)**

(72) Erfinder:
• **Konrad, Matthias, Dr.**
**65719 Hofheim (DE)**
• **Jesberger, Martin, Dr.**
**55122 Mainz (DE)**
• **Kuhmann, Bodo**
**65594 Runkel (DE)**

(74) Vertreter: **Schweitzer, Klaus et al**
**Zounek Plate Schweitzer**
**Patentanwaltskanzlei**
**Rheingaustrasse 196**
**65203 Wiesbaden (DE)**

(54) **Biaxial orientierte Polyesterfolie, die Siliziumdioxid und Titandioxid enthält**

(57) Die Erfindung betrifft eine biaxial orientierte Polyesterfolie, die aus mindestens einer Basisschicht (B) aufgebaut ist, die 0,25 bis kleiner 1,0 Gew.-% $SiO_2$ und 0,25 bis kleiner 1,0 Gew.-% $TiO_2$ enthält. Die Erfindung betrifft weiterhin ein Verfahren für die Herstellung der Folie und ihre Verwendung. Die erfindungsgemäße Folie zeichnet sich durch charakteristische Oberflächen und definierte optische Eigenschaften aus und ist für die Verwendung im industriellen Sektor gut geeignet.

EP 1 674 507 A1

**Beschreibung**

Die Erfindung betrifft eine biaxial orientierte Polyesterfolie, die aus mindestens einer Basisschicht (B) aufgebaut ist, die 0,25 bis <1,0 Gew.-% $SiO_2$ und 0,25 bis <1,0 Gew.-% $TiO_2$ enthält. Die Erfindung betrifft weiterhin ein Verfahren für die Herstellung der Folie und ihre Verwendung.

Die erfindungsgemäße Folie zeichnet sich durch charakteristische Oberflächen und definierte optische Eigenschaften aus und ist für die Verwendung im industriellen Sektor gut geeignet.

Die Industrie hat einen hohen Bedarf an Kunststofffolien wie z. B. biaxial orientierte Polypropylen- oder biaxial orientierte Polyesterfolien, die definierte Oberflächen und optische Eigenschaften aufweisen. Folien mit gleichmäßiger, nicht zu hoher Oberflächenrauheit sind von Interesse in speziellen Anwendungen.

In der US-A-3,154,461 wird ein Verfahren zur Herstellung einer biaxial orientierten Folie aus thermoplastischem Kunststoff (z. B. Polyethylenterephthalat, Polypropylen) mit matter Oberfläche beansprucht, bei dem die Folie inkompressible Partikel (z. B. Calciumcarbonat, Siliciumdioxid) in einer Größe von 0,3 bis 20 $\mu$m und in einer Konzentration von 1 bis 25 Gew.-% enthält. Weiterhin ist in dieser Anmeldung die matte Folie, hergestellt nach dem erfindungsgemäßen Verfahren, beansprucht. Für viele Anwendungen ist die nach dem erfindungsgemäßen Verfahren hergestellte Folie zu rau.

In der EP-A-1 197 326 wird eine matte, biaxial orientierte Polyesterfolie beschrieben, die 1 bis 10 Gew.-% Partikel mit einer mittleren Partikelgröße von 2 bis 5 $\mu$m enthält. Die mittlere Rauigkeit $R_a$ dieser Folien liegt im Bereich von 150 bis 1000 $\mu$m. Über die Gleichmäßigkeit der Rauheit und die Höhe der höchsten Erhebungen werden keine Aussagen gemacht.

In der EP-B-0 152 265 wird eine Polyesterfolie beschrieben, die 0,01 bis 1,0 Gew.-% Siliziumdioxid und/oder Titandioxid mit einer mittleren Teilchengröße von 0,01 bis 0,5 $\mu$m und 0,02 bis 0,5 Gew.-% Calciumcarbonat mit einer mittleren Teilchengröße von 0,04 bis 0,48 $\mu$m enthält. Diese Folie besitzt aufgrund der kleinen Partikel eine sehr niedrige Rauigkeit, über die Transparenz werden keine Aussagen getroffen.

Die JP-A-62-241928 beschreibt eine Folie, die Titandioxid, Siliziumdioxid und einen optischen Aufheller enthält. Die Konzentration des Titandioxids liegt im Bereich von 8 bis 20 Gew.-%, dadurch hat die Folie eine sehr niedrige Transparenz.

In der EP-A-0 723 565 wird eine Polyesterfolie beansprucht, die 1 bis 20 Gew.-% Titandioxid und 0,1 bis 6 Gew.-% Glimmer mit einer mittleren Teilchengröße von 3 bis 40 $\mu$m enthält. Aufgrund der hohen Titandioxidmenge ist die Transparenz zu gering.

In der US-A-5,403,879 wird eine Polyesterfolie beansprucht, die 5 bis 25 Gew.-% Titandioxid, 0,1 bis 3 Gew.-% Silica mit einer mittleren Teilchengröße von 1 bis 5 $\mu$m und 0,02 bis 1,0 Gew.-% eines fluoreszierenden organischen Pigments enthält. Durch die hohe Konzentration an Titandioxid besitzt die Folie eine sehr niedrige Transparenz. In den Beispielen werden Folien mit einer Transparenz von kleiner 2 % genannt bei einer Foliendicke von 188 $\mu$m.

Aufgabe der vorliegenden Erfindung war es, eine biaxial orientierte Polyesterfolie bereitzustellen, die eine gleichmäßig niedrige Rauigkeit und definierte optische Eigenschaften aufweist. Insbesondere sollte die Transparenz der Folie im Bereich von 30 bis 90 % liegen. Die Struktur der Oberfläche soll dazu führen, dass sich die Folie gut verarbeiten und beschichten lässt. Es dürfen keine hohen Spitzen ($R_p$ über 4 $\mu$m) vorhanden sein. Diese würden zu Defekten in der Beschichtung führen. Solche Folien werden z. B. benötigt in Anwendungen, bei denen die Oberflächentopographie der Folie auf ein Substrat übertragen wird, und speziell dann, wenn die Folie mit einer Trennschicht, die auf dem Substrat haften bleibt, beschichtet wird.

Die Aufgabe wird erfindungsgemäß durch eine biaxial orientierte Polyesterfolie mit mindestens einer matten Basisschicht (B) gelöst, die sowohl Siliziumdioxid zur Erzeugung der Oberflächenrauigkeit als auch Titandioxid zur Einstellung der Transparenz enthält. Die Konzentration der beiden Füllstoffe liegt bei jeweils 0,25 bis <1,0 Gew.-%, bevorzugt 0,3 bis 0,95 Gew.-%, besonders bevorzugt bei 0,35 bis 0,9 Gew.-%, bezogen auf das Gesamtgewicht der Folie. Durch entsprechende Variation der Konzentration der beiden Füllstoffe erreicht man für unterschiedlich dicke Folien Rau-und Transparenzwerte, die im gewünschten Bereich liegen.

Bevorzugt weist die erfindungsgemäße Folie folgende Eigenschaften auf:

- Die höchste Erhebung auf der Folie ($R_p$) ist kleiner 4,0 $\mu$m, bevorzugt kleiner 3,5 $\mu$m und besonders bevorzugt kleiner 3,0 $\mu$m.
- Die Größe der $SiO_2$-Partikel liegt zwischen 0,5 $\mu$m und 3,0 $\mu$m, bevorzugt zwischen 1,0 $\mu$m und 2,8 $\mu$m und besonders bevorzugt zwischen 1,5 $\mu$m und 2,5 $\mu$m ($d_{50}$). Das Siliziumdioxid ist bevorzugt amorphe Kieselsäure. Die Ausdehnung der $SiO_2$-Partikel sollte in alle Raumrichtungen ungefähr gleich groß sein, d. h. das Verhältnis von Länge zu Breite zu Höhe sollte nahe bei 1:1:1 liegen, bevorzugt bei (0,9-1,1): (0,9-1,1):1.
- Die Transparenz der Folie liegt im Bereich zwischen 30 und 90 %, bevorzugt zwischen 40 und 80 % und besonders bevorzugt zwischen 50 und 70 %.
- Das Titandioxid kann sowohl vom Rutil-Typ als auch vom Anatas-Typ sein. Die Korngröße des Titandioxids liegt bevorzugt zwischen 0,02 und 0,6 μm, bevorzugt zwischen 0,05 und 0,5 μm und besonders bevorzugt zwischen 0,1 und 0,4 μm.

- Die Zahl der Erhebungen auf der Oberfläche der Folie, die höher als 0,1 μm sind, liegt zwischen 800 und 10000 pro mm², bevorzugt zwischen 1000 und 7500 pro mm² und besonders bevorzugt zwischen 1200 pro mm² und 5000 pro mm².
- Der Glanz der Folie, gemessen bei 60°, liegt zwischen 20 und 100, bevorzugt zwischen 30 und 85 und besonders bevorzugt zwischen 40 und 70.

Erfindungsgemäß ist die Folie vorzugsweise einschichtig aufgebaut und umfasst in diesem Fall als Schicht nur die Basisschicht (B).

Die Basisschicht (B) der Folie enthält bevorzugt mindestens 70 Gew.-% thermoplastischen Polyester. Dafür geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroxymethyl-cyclohexan und Terephthalsäure [= Poly(1,4-cyclohexandimethylenterephthalat), PCDT] sowie aus Ethylenglykol, Naphthalin-2,6-dicarbonsäure und Biphenyl-4,4'-dicarbonsäure (= Polyethylen-2,6-naphthalatbibenzoat, PENBB). Bevorzugt sind Polyester, die zu mindestens 90 Mol-%, besonders bevorzugt mindestens 95 Mol-%, aus Ethylenglykol- und Terephthalsäure-Einheiten oder aus Ethylenglykol- und Naphthalin-2,6-dicarbonsäure-Einheiten bestehen. In einer ganz bevorzugten Ausführungsform besteht die Basisschicht aus Polyethylenterephthalat-Homopolymer.

Geeignete andere aliphatische Diole sind beispielsweise Diethylenglykol, Triethylenglykol, aliphatische Glykole der allgemeinen Formel $HO-(CH_2)_n-OH$, wobei n eine ganze Zahl von 3 bis 6 darstellt, (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen. Von den cycloaliphatischen Diolen sind Cyclohexandiole (insbesondere Cyclohexan-1,4-diol) zu nennen. Geeignete andere aromatische Diole entsprechen beispielsweise der Formel $HO-C_6H_4-X-C_6H_4-OH$, wobei X für $-CH_2-$, $-C(CH_3)_2-$, $-C(CF_3)_2-$, $-O-$, $-S-$ oder $-SO_2-$ steht. Daneben sind auch Bisphenole der Formel $HO-C_6H_4-C_6H_4-OH$ gut geeignet.

Andere aromatische Dicarbonsäuren sind bevorzugt Benzoldicarbonsäuren, Naphthalindicarbonsäuren, beispielsweise Naphthalin-1,4- oder -1,6-dicarbonsäure, Biphenyl-x,x'-dicarbonsäuren, insbesondere Biphenyl-4,4'-dicarbonsäure, Diphenyl-acetylen-x,x'-dicarbonsäuren, insbesondere Diphenylacetylen-4,4'-dicarbonsäure, oder Stilben-x,x'-dicarbonsäuren. Von den cycloaliphatischen Dicarbonsäuren sind Cyclohexandicarbonsäuren, insbesondere Cyclohexan-1,4-dicarbonsäure, zu nennen. Von den aliphatischen Dicarbonsäuren sind die ($C_3$ bis $C_{19}$)-Alkandisäuren besonders geeignet, wobei der Alkanteil geradkettig oder verzweigt sein kann.

Die gegebenenfalls vorhandene(n) zusätzlichen Schichten (Zwischen- oder Deckschichten) der Folie bestehen bevorzugt ebenfalls aus einem Polyester, wie er oben für die Basisschicht beschrieben wurde, wobei die Zusammensetzung gleich oder verschieden ist von der der Basisschicht.

Die Herstellung der Polyester kann z. B. nach dem Umesterungsverfahren erfolgen. Dabei geht man von Dicarbonsäureestern und Diolen aus, die mit den üblichen Umesterungskatalysatoren wie Zink-, Calcium-, Lithium-, Magnesium- und Mangan-Salzen umgesetzt werden. Die Zwischenprodukte werden dann in Gegenwart allgemein üblicher Polykondensationskatalysatoren wie Antimontrioxid oder Titan-Salzen polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Die Folie gemäß der Erfindung enthält sowohl $SiO_2$-Partikel als auch $TiO_2$-Partikel zur Erzeugung der gewünschten Oberflächeneigenschaften und Optik.

Die $SiO_2$-Partikel sind in der Folie in einer Menge von 0,25 bis <1,0 Gew.-%, bevorzugt 0,3 bis 0,95 Gew.-%, besonders bevorzugt 0,35 bis 0,9 Gew.-%, (bezogen auf das Gesamtgewicht der Folie) enthalten. Wenn die Folie mehrschichtig ist, dann ist die angegebene Menge an $SiO_2$-Partikeln zumindest in einer äußeren Schicht enthalten. Sind weniger als 0,25 Gew.-% vorhanden, so sind zu wenig Erhebungen an der Oberfläche der Folie. Sind 1,0 oder mehr als 1,0 Gew.-% vorhanden, so wird die Oberfläche inhomogen, da Partikel an der Oberfläche durch darunter liegende Partikel nach oben gedrückt werden. Bevorzugt weisen die $SiO_2$-Partikel eine mittlere Teilchengröße von 0,5 bis 3,0 μm, bevorzugt von 1 bis 2,8 μm und besonders bevorzugt von 1,5 bis 2,5 μm ($d_{50}$) auf. Sind die Partikel größer als 3,0 μm, so sind die Erhebungen zu hoch und führen zu Beschichtungsfehlern. Die Ausdehnung der $SiO_2$-Partikel sollte in alle Raumrichtungen ungefähr gleich groß sein, d. h. das Verhältnis von Länge zu Breite zu Höhe sollte nahe bei 1:1:1 liegen, bevorzugt bei (0,9-1,1):(0,9-1,1):1. Als Siliziumdioxidpartikel werden bevorzugt amorphe Kieselsäurepartikel eingesetzt.

Die $TiO_2$-Partikel sind in der Folie ebenfalls in einer Menge von 0,25 bis <1,0 Gew.-%, bevorzugt 0,3 bis 0,95 Gew.-%, besonders bevorzugt 0,35 bis 0,9 Gew.-%, (bezogen auf das Gesamtgewicht der Folie, auch wenn die Folie mehrschichtig ist) enthalten. Sind weniger als 0,25 Gew.-% vorhanden, so ist die Transparenz zu hoch. Sind 1,0 oder mehr als 1,0 Gew.-% vorhanden, ist die Transparenz zu niedrig. Bevorzugt weisen die $TiO_2$-Partikel eine mittlere Teilchengröße ($d_{50}$) von 0,02 bis 0,6 μm, bevorzugt von 0,05 bis 0,5 μm und besonders bevorzugt von 0,1 bis 0,4 μm auf. Sind die Partikel kleiner als 0,02 μm, so bilden sich leicht Agglomerate. Sind die Partikel größer als 0,6 μm, so beeinflussen

sie die Rauigkeit. Die Titandioxidpartikel können sowohl vom Rutil-Typ als auch vom Anatas-Typ sein.

Die Kombination der $SiO_2$-Partikel und $TiO_2$-Partikel bewirkt, dass die höchste Erhebung auf der Folie ($R_p$) kleiner gleich 4,0 $\mu$m ist, bevorzugt kleiner gleich 3,5 $\mu$m und besonders bevorzugt kleiner gleich 3,0 $\mu$m. Ist sie größer als 4,0 $\mu$m, so durchstoßen diese Spitzen eine in einem weiteren Verarbeitungsschritt aufgebrachte Beschichtung. Die Gesamtzahl der Erhebungen auf der Oberfläche der Folie, die höher als 0,1 $\mu$m sind, liegt zwischen 800 und 10000 pro $mm^2$, bevorzugt zwischen 1000 und 7500 pro $mm^2$ und besonders bevorzugt zwischen 1200 pro $mm^2$ und 5000 pro $mm^2$. Ist sie kleiner als 800 pro $mm^2$, so führt dies zu Problemen bei der Verarbeitung.

Die Kombination der $SiO_2$-Partikel und $TiO_2$-Partikel bewirkt außerdem, dass die Transparenz der Folie zwischen 30 und 90 %, bevorzugt zwischen 40 und 80 % und besonders bevorzugt zwischen 50 und 70 % liegt.

Die Basisschicht (B) kann neben den $SiO_2$- und $TiO_2$-Partikeln noch zusätzlich übliche Additive wie beispielsweise Stabilisatoren enthalten. Als Stabilisatoren werden vorteilhaft beispielsweise Phosphorverbindungen wie Phosphorsäure oder Phosphorsäureester eingesetzt. Weitere Partikel, die die Oberflächeneigenschaften und/oder Optik der Folie beeinflussen, wie $CaCO_3$-Partikel sind in der erfindungsgemäßen Folie bevorzugt nicht vorhanden.

Die Dicke der erfindungsgemäßen Polyesterfolie kann innerhalb bestimmter Grenzen variieren. Sie liegt vorteilhaft im Bereich von 10 bis 350 $\mu$m, insbesondere von 15 bis 300 $\mu$m, vorzugsweise von 20 bis 250 $\mu$m.

**Herstellungsverfahren:**

Die Erfindung betrifft auch ein Verfahren zur Herstellung der erfindungsgemäßen Polyesterfolie nach dem an sich aus der Literatur bekannten Extrusionsverfahren (s. z. B.: "Handbook of Thermoplastic Polyesters, Ed. S. Fakirov, Wiley-VCH, 2002" oder im Kapitel "Polyesters, Films" in der "Encyclopedia of Polymer Science and Engineering, Vol. 12, John Wiley & Sons, 1988").

Im Rahmen dieses Verfahrens wird so vorgegangen, dass die der Folie entsprechende Schmelze durch eine Flachdüse extrudiert wird, die so erhaltene Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Behandlung vorgesehenen Oberflächenschicht noch corona- oder flammbehandelt wird.

Die biaxiale Streckung (Orientierung) wird im Allgemeinen aufeinander folgend durchgeführt, wobei die aufeinander folgende biaxiale Streckung, bei der zuerst längs (in Maschinenrichtung) und dann quer (senkrecht zur Maschinenrichtung) gestreckt wird, bevorzugt ist.

Zunächst wird, wie beim Extrusionsverfahren üblich, das Polymere bzw. die Polymermischung für die Folie in einem Extruder komprimiert und verflüssigt, wobei die gegebenenfalls als Zusätze vorgesehenen Additive bereits im Polymer bzw. in der Polymermischung enthalten sein können. Die Schmelze wird dann gleichzeitig durch eine Flachdüse (Breitschlitzdüse) gepresst, und die ausgepresste Schmelze wird auf einer oder mehreren gekühlten Abzugswalzen abgezogen, wobei die Schmelze abkühlt und sich zu einer Vorfolie verfestigt.

Die biaxiale Streckung wird im Allgemeinen sequentiell durchgeführt. Dabei wird die Vorfolie vorzugsweise zuerst in Längsrichtung (d. h. in Maschinenrichtung = MD-Richtung) und anschließend in Querrichtung (d. h. senkrecht zur Maschinenrichtung = TD-Richtung) gestreckt. Dies führt zu einer räumlichen Ausrichtung (Orientierung) der Polymerketten. Das Strecken in Längsrichtung lässt sich mit Hilfe zweier entsprechend dem angestrebten Streckverhältnis verschieden schnell rotierender Walzen durchführen. Zum Querstrecken benutzt man allgemein einen entsprechenden Kluppenrahmen, in dem die Folie an beiden Rändern eingespannt und dann bei erhöhter Temperatur nach beiden Seiten gezogen wird.

Die Temperatur, bei der die Streckung durchgeführt wird, kann in einem relativ großen Bereich variieren und richtet sich nach den gewünschten Eigenschaften der Folie. Im Allgemeinen wird die Längsstreckung bei einer Temperatur im Bereich von 80 bis 130 °C und die Querstreckung im Bereich von 80 bis 150 °C durchgeführt. Das Längsstreckverhältnis liegt allgemein im Bereich von 2,5:1 bis 5:1, bevorzugt von 3:1 bis 4,5:1. Das Querstreckverhältnis liegt allgemein im Bereich von 3,0:1 bis 5,0:1, bevorzugt von 3,5:1 bis 4,5:1.

Bei der nachfolgenden Thermofixierung wird die Folie über eine Zeitdauer von etwa 0,1 bis 10 s bei einer Temperatur im Bereich von 150 bis 250 °C gehalten. Anschließend wird die Folie in üblicher Weise aufgewickelt.

Nach der biaxialen Streckung können eine oder beide Oberfläche/n der Folie nach einer der bekannten Methoden corona- oder flammbehandelt werden. Die Behandlungsintensität wird so eingestellt, dass sich eine Oberflächenspannung im Bereich von über 45 mN/m einstellt.

Zur Einstellung weiterer gewünschter Eigenschaften kann die Folie zusätzlich beschichtet werden. Typische Beschichtungen sind haftvermittelnd, antistatisch, schlupfverbessernd, hydrophil oder dehäsiv wirkend. Es bietet sich an, diese zusätzlichen Schichten über In-line-Beschichtung mittels wässriger Dispersionen nach dem Streckschritt in Längsrichtung und vor dem Streckschritt in Querrichtung auf die Folie aufzubringen.

Bei der Herstellung der erfindungsgemäßen Folie ist gewährleistet, dass das Verschnittmaterial (Regenerat) in einer Menge im Bereich von bis zu 70 Gew.-%, bezogen auf das Gesamtgewicht der Folie, wieder der Extrusion zugeführt werden kann, ohne dass dabei die physikalischen Eigenschaften der Folie nennenswert negativ beeinflusst werden, insbesondere nicht ihr optisches Erscheinungsbild.

Die erfindungsgemäße Folie zeichnet sich durch definierte optische Eigenschaften und eine gleichmäßige Rauigkeit aus. Die folgende Tabelle 1 gibt die Eigenschaften der erfindungsgemäßen Folien wider.

**Tabelle 1**

| Folieneigenschaften | erfindungsgemäßer Bereich | bevorzugt | besonders bevorzugt | Einheit | Messmethode |
|---|---|---|---|---|---|
| Gehalt an $SiO_2$ | 0,25-<1,0 | 0,3-0,95 | 0,35-0,9 | Gew.-% | |
| Gehalt an $TiO_2$ | 0,25-<1,0 | 0,3-0,95 | 0,35-0,9 | Gew.-% | |
| Höchste Erhebung ($R_p$) | < 4,0 | < 3,5 | < 3,0 | $\mu$m | |
| Partikelgröße $SiO_2$ ($d_{50}$) | 0,5-3,0 | 1,0-2,8 | 1,5-2,5 | $\mu$m | |
| Partikelgröße $TiO_2$ ($d_{50}$) | 0,02-0,6 | 0,05-0,5 | 0,1-0,3 | $\mu$m | |
| Transparenz | 30-90 | 40-80 | 50-70 | % | ASTM-D 1003-00 |
| Glanz (60°) | 20-100 | 30-85 | 40-70 | | DIN 67 530 |
| Anzahl der Erhebungen >0,1 $\mu$m | 800-10000 | 1000-7500 | 1200-5000 | $1/mm^2$ | |

Aufgrund ihrer Eigenschaften eignen sich die erfindungsgemäßen Folien zur Erzeugung von wenig glänzenden, rauen Oberflächen auf verschiedenen Substraten, besonders wenn zunächst dünne Schichten auf die Folie aufgebracht werden. In diesem Falle kommt es durch die niedrige, gleichmäßige Rauigkeit zur homogenen Beschichtung der Oberfläche. Eine Bildung von Löchern oder Dünnstellen in der Beschichtung wird verhindert. Besonders bevorzugt ist die Anwendung als Transfer- und Trennfolie.

Zur Charakterisierung der Rohstoffe und der Folien wurden im Rahmen der vorliegenden Erfindung die folgenden Messmethoden benutzt:

**SV-Wert (standard viscosity)**

Die Standardviskosität SV (DCE) wird, angelehnt an DIN 53726, bei 25 °C in Dichloressigsäure gemessen. Die intrinsische Viskosität (IV) berechnet sich wie folgt aus der Standardviskosität

$$IV = [\eta] = 6{,}907 \bullet 10^{-4}\ SV\ (DCE) + 0{,}063096\ [dl/g]$$

**Glanz**

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 60° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Messwert ist dimensionslos und muss mit dem Einstrahlwinkel angegeben werden.

**Messung des mittleren Durchmessers $d_{50}$**

Die Bestimmung des mittleren Durchmessers $d_{50}$ wurde mittels Laser auf einem Malvern Master Sizer nach der Standardmethode durchgeführt (andere Messgeräte sind z. B. Horiba LA 500 oder Sympathec Helos, welche das gleiche Messprinzip verwenden). Die Proben wurden dazu in eine Küvette mit Wasser gegeben und diese dann in das Messgerät gestellt. Der Messvorgang ist automatisch und beinhaltet auch die mathematische Bestimmung des $d_{50}$-Wertes.

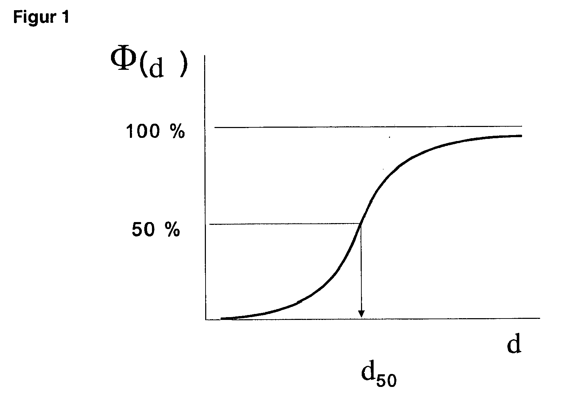

Der $d_{50}$-Wert wird dabei definitionsgemäß aus der (relativen) Summenkurve der Partikelgrößenverteilung bestimmt: Der Schnittpunkt des 50 %-Ordinatenwertes mit der Summenkurve liefert auf der Abszissenachse sofort den gewünschten $d_{50}$-Wert. Wie dies zu verstehen ist, wird in Figur 1 näher verdeutlicht.

**Höchste Erhebung, Anzahl der Erhebungen**

Die höchste Erhebung auf der Folie und die Anzahl der Erhebungen wurden mit einem Weißlicht-Interferometrie-Mikroskop der Firma Veeco, Typ Wyko NT3300 bestimmt. Zur Messung wurde ein Folienstück von 10 • 10 cm Größe auf den Tisch des Mikroskops gelegt und zur Fixierung mit einem Metallring mit einem Durchmesser von 5 cm beschwert. Gemessen wurde eine Fläche von 0,9 mm • 1,2 mm bei 5,1-facher Vergrößerung, die einzelnen Messpunkte liegen 1,65 $\mu$m auseinander. Eine eventuelle Welligkeit des Musters wurde herausgefiltert. Die maximale Erhebung $R_p$ ist der Abstand von der berechneten Mittelebene (Mittelwert aller Messpunkte) zum höchsten Punkt analog DIN EN ISO 4287.
Für die Bestimmung der Anzahl der Erhebung wurden diese wie folgt definiert. Eine Erhebung oder Spitze ist ein Messpunkt, der mindestens 0,1 $\mu$m höher ist (in z-Richtung) als seine vier nächsten Nachbarn (in x- und y-Richtung) und der höher ist als 20 % der Höhe der höchsten Erhebung. Angegeben sind jeweils die Mittelwerte aus 5 Einzelmessungen.

**Transparenz**

Die Messung an den Polyesterfolien erfolgt am Hazegard Hazemeter XL-211 der Fa. BYK Gardner nach ASTM-D 1003-00.
Im Folgenden wird die Erfindung anhand von Beispielen näher erläutert.

**Beispiel 1**

Chips aus Polyethylenterephthalat wurden getrocknet und dem Extruder für die Basisschicht (B) zugeführt. Dann wurde durch Extrusion und anschließende stufenweise Orientierung in Längs- und Querrichtung eine einschichtige Folie mit einer Gesamtdicke von 100 $\mu$m hergestellt.

Folie, Mischung aus:

| 75 Gew.-% | Polyethylenterephthalat mit einem SV-Wert von 800 |
|---|---|
| 25 Gew.-% | Masterbatch aus 96 Gew.-% Polyethylenterephthalat, 2,0 Gew.-% Kieselsäurepartikel mit einem $d_{50}$-Wert von 2,0 $\mu$m und 2,0 Gew.-% Titandioxid mit einem $d_{50}$-Wert von 0,2 $\mu$m. |

Die Herstellungsbedingungen in den einzelnen Verfahrensschritten waren:

| Extrusion: | Temperaturen | 290 °C |
|---|---|---|
| | Temperatur der Abzugswalze | 30 °C |
| Längsstreckung: | Temperatur: | 80-126 °C |
| | Längsstreckverhältnis: | 3,5 |
| Querstreckung: | Temperatur: | 80-135 °C |
| | Querstreckverhältnis | 4,0 |
| Fixierung: | Temperatur: | 230 °C |
| | Dauer: | 3 s |

Die Folie hatte die geforderte gleichmäßige niedrige Rauigkeit und die geforderte Transparenz. Die erzielten Eigenschaften der Folie sind in der Tabelle 2 wiedergegeben.

**Beispiel 2**

Im Vergleich zu Beispiel 1 wurde die Zusammensetzung der Folie wie folgt geändert:
Folie, Mischung aus:

| 60 Gew.-% | Polyethylenterephthalat mit einem SV-Wert von 800 |
|---|---|

Tabelle fortgesetzt

| 40 Gew.-% | Masterbatch aus 96 Gew.-% Polyethylenterephthalat, 2,0 Gew.-% Kieselsäurepartikel mit einem $d_{50}$-Wert von 2,0 $\mu$m und 2,0 Gew.-% Titandioxid mit einem $d_{50}$-Wert von 0,2 $\mu$m. |

Die Rauigkeit der Folie hat sich gegenüber Beispiel 1 erhöht, die Transparenz verringert.

**Beispiel 3**

Im Vergleich zu Beispiel 1 wurde die Zusammensetzung der Folie wie folgt geändert:
Folie, Mischung aus:

| 75 Gew.-% | Polyethylenterephthalat mit einem SV-Wert von 800 |
| 25 Gew.-% | Masterbatch aus 96 Gew.-% Polyethylenterephthalat, 2,0 Gew.-% Kieselsäurepartikel mit einem $d_{50}$-Wert von 2,5 $\mu$m und 2,0 Gew.-% Titandioxid mit einem $d_{50}$-Wert von 0,2 $\mu$m. |

Die Rauigkeit der Folie hat sich gegenüber Beispiel 1 erhöht.

**Vergleichsbeispiel 1**

Im Vergleich zu Beispiel 1 wurde jetzt die Folie mit einem Partikelsystem entsprechend der EP-A-1 197 326 hergestellt. Die Beispiele der EP-A-1 197 326 weisen $SiO_2$-Gehalte auf, die bei 2 bis 3 Gew.-% liegen. Es wurde ein Vergleich mit einer Partikelkonzentration gewählt, die näher am Gegenstand der vorliegenden Erfindung liegt (1,0 Gew.-%). Die Rauigkeit der Folie ist zu hoch.

Folie, Mischung aus:

| 80 Gew.-% | Polyethylenterephthalat mit einem SV-Wert von 800 |
| 20 Gew.-% | Masterbatch aus 95 Gew.-% Polyethylenterephthalat und 5,0 Gew.-% Kieselsäurepartikel mit einem $d_{50}$-Wert von 3,4 $\mu$m. |

**Tabelle 2**

| Beispiel | Foliendicke [µm] | Durchmesser SiO$_2$ in Folie [µm] | Konzentration SiO$_2$ [Gew.-%] | Durchmesser TiO$_2$ [µm] | Konzentration TiO$_2$ [Gew.-%] | Anzahl der Peaks >0,1 µm | Höchste Erhebung R$_p$ [µm] | Transparenz [%] | Glanz bei 60° |
|---|---|---|---|---|---|---|---|---|---|
| B 1 | 100 | 2 | 0,5 | 0,2 | 0,5 | 1900 | 2,78 | 61 | 65 |
| B 2 | 100 | 2 | 0,8 | 0,2 | 0,8 | 2400 | 2,91 | 48 | 49 |
| B 3 | 100 | 2,5 | 0,5 | 0,2 | 0,5 | 2000 | 3,12 | 62 | 51 |
| VB 1 | 100 | 3,4 | 1,0 | - | - | 2600 | 4,45 | 65 | 38 |

**Patentansprüche**

1. Biaxial orientierte Polyesterfolie, die aus mindestens einer Basisschicht (B) aufgebaut ist, die 0,25 bis kleiner 1,0 Gew.-% $SiO_2$ und 0,25 bis kleiner 1,0 Gew.-% $TiO_2$ enthält.

2. Polyesterfolie nach Anspruch 1, **dadurch gekennzeichnet, dass** die höchste Erhebung auf der Folie ($R_p$) kleiner ist als 4,0 $\mu$m.

3. Polyesterfolie nach Anspruch 1 oder 2, **dadurch gekennzeichnet, dass** die Größe der $SiO_2$-Partikel zwischen 0,5 $\mu$m und 3,0 $\mu$m liegt ($d_{50}$).

4. Polyesterfolie nach einem der Ansprüche 1 bis 3, **dadurch gekennzeichnet, dass** das $SiO_2$ bevorzugt amorphe Kieselsäure ist.

5. Polyesterfolie nach einem der Ansprüche 1 bis 4, **dadurch gekennzeichnet, dass** die Ausdehnung der $SiO_2$-Partikel in allen Raumrichtungen ungefähr gleich groß ist.

6. Polyesterfolie nach einem der Ansprüche 1 bis 5, **dadurch gekennzeichnet, dass** das $TiO_2$ vom Rutil-Typ oder vom Anatas-Typ ist.

7. Polyesterfolie nach einem der Ansprüche 1 bis 6, **dadurch gekennzeichnet, dass** die Größe der $TiO_2$-Partikel zwischen 0,02 und 0,6 $\mu$m liegt ($d_{50}$).

8. Polyesterfolie nach einem der Ansprüche 1 bis 7, **dadurch gekennzeichnet, dass** die Transparenz der Folie im Bereich zwischen 30 und 90 % liegt.

9. Polyesterfolie nach einem der Ansprüche 1 bis 8, **dadurch gekennzeichnet, dass** die Zahl der Erhebungen auf der Oberfläche der Folie, die höher als 0,1 $\mu$m sind, zwischen 800 und 10000 pro $mm^2$ liegt.

10. Polyesterfolie nach einem der Ansprüche 1 bis 9, **dadurch gekennzeichnet, dass** der Glanz der Folie, gemessen bei 60°, zwischen 20 und 100 liegt.

11. Folie nach einem der Ansprüche 1 bis 10, **dadurch gekennzeichnet, dass** sie einschichtig ist.

12. Folie nach einem der Ansprüche 1 bis 11, **dadurch gekennzeichnet, dass** sie - abgesehen von gegebenenfalls vorhandenen Katalysatorpräzipitaten - keine weiteren Partikel enthält.

13. Folie nach einem der Ansprüche 1 bis 12, **dadurch gekennzeichnet, dass** sie eine Dicke von 10 bis 350 $\mu$m aufweist.

14. Verfahren zur Herstellung einer Folie nach Anspruch 1, wobei man ein Polyesterpolymer in mindestens einem Extruder aufschmilzt und die erhaltene Polymerschmelze entsprechend der Zusammensetzung der Folienschicht einer Düse oder die erhaltenen Polymerschmelzen entsprechend der Zusammensetzungen der Deck- und Basisschichten einer Mehrschichtdüse zuführt, aus der Düse auf eine Abkühlwalze extrudiert und die so erhaltene Vorfolie anschließend biaxial verstreckt und hitzefixiert, wobei die Polymerschmelze für die Basisschicht 0,25 bis kleiner 1,0 Gew.-% $SiO_2$ und 0,25 bis kleiner 1,0 Gew.-% $TiO_2$ enthält.

15. Verwendung einer Folie nach Anspruch 1 im industriellen Sektor.

16. Verwendung nach Anspruch 11 als Trenn- oder Transferfolie.

**Figur 1**

**Europäisches Patentamt**

**EUROPÄISCHER RECHERCHENBERICHT**

Nummer der Anmeldung

EP 05 02 7261

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 4 274 025 A (NERURKAR ET AL) 16. Juni 1981 (1981-06-16) * Spalte 1, Zeile 34 - Spalte 3, Zeile 50; Ansprüche; Beispiele 1-3 * ----- | 1-16 | C08J5/18 C08K3/36 C08K3/22 |
| X | PATENT ABSTRACTS OF JAPAN Bd. 013, Nr. 180 (P-864), 27. April 1989 (1989-04-27) & JP 01 010416 A (TEIJIN LTD), 13. Januar 1989 (1989-01-13) * Zusammenfassung; Beispiel 3 * ----- | 1-15 | |

RECHERCHIERTE SACHGEBIETE (IPC)

C08J
C08K

Der vorliegende Recherchenbericht wurde für alle Patentansprüche erstellt

| Recherchenort | Abschlußdatum der Recherche | Prüfer |
|---|---|---|
| München | 17. Januar 2006 | Otegui Rebollo, J |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 05 02 7261

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-01-2006

| Im Recherchenbericht angeführtes Patentdokument | Datum der Veröffentlichung | Mitglied(er) der Patentfamilie | | Datum der Veröffentlichung |
|---|---|---|---|---|
| US 4274025 A | 16-06-1981 | AU | 2384877 A | 05-10-1978 |
| | | BE | 854156 A1 | 31-10-1977 |
| | | DE | 2718979 A1 | 17-11-1977 |
| | | DK | 177877 A | 30-10-1977 |
| | | ES | 458292 A1 | 16-02-1978 |
| | | FR | 2349624 A1 | 25-11-1977 |
| | | GB | 1568704 A | 04-06-1980 |
| | | IT | 1113577 B | 20-01-1986 |
| | | JP | 52133356 A | 08-11-1977 |
| | | LU | 77210 A1 | 01-06-1978 |
| | | NL | 7704663 A | 01-11-1977 |
| | | NZ | 183713 A | 20-06-1978 |
| JP 01010416 A | 13-01-1989 | JP | 1920196 C | 07-04-1995 |
| | | JP | 6048535 B | 22-06-1994 |

EPO FORM P0461

Für nähere Einzelheiten zu diesem Anhang : siehe Amtsblatt des Europäischen Patentamts, Nr.12/82